# FASCICULE DE BREVET EUROPEEN

(11) **EP 2 038 175 B1**
(45) Date de publication et mention de la délivrance du brevet: **18.11.2009**
(21) Numéro de dépôt: 07787293.5
(22) Date de dépôt: 10.07.2007
(51) Int. Cl.: B64D 27/26, B64D 27/18

(54) **ENSEMBLE MOTEUR POUR AERONEF COMPRENANT UN BERCEAU DE SUPPORT DE CAPOT DE SOUFFLANTE MONTE SUR DEUX ELEMENTS DISTINCTS**
TRIEBWERKSANORDNUNG FÜR EIN FLUGZEUG MIT STÜTZGESTELL FÜR EINE AUF ZWEI SEPARATEN ELEMENTEN MONTIERTE LÜFTERHAUBE
ENGINE ASSEMBLY FOR AN AIRCRAFT COMPRISING A SUPPORT CRADLE FOR A FAN SHROUD MOUNTED ON TWO SEPARATE ELEMENTS

(30) Priorité: 11.07.2006 FR 0652910
(43) Date de publication de la demande: 25.03.2009
(73) Titulaire: AIRBUS France, 31060 Toulouse (FR)
(72) Inventeur: ROCHE, Frédéric, 31530 Bretx (FR); MARTINOU, Jean-Marc, 31240 L'Union (FR)
(74) Mandataire: Ilgart, Jean-Christophe
(86) Numéro de dépôt international: PCT/EP2007/057018
(87) Numéro de publication internationale: WO 2008/006823

(56) Documents cités:
- EP-A1- 0 453 360
- US-A- 4 458 863
- US-A- 6 131 850

## Description

### DOMAINE TECHNIQUE

La présente invention se rapporte de façon générale à un ensemble moteur pour aéronef comprenant un moteur, un dispositif d'accrochage du moteur ainsi qu'une nacelle entourant le moteur et pourvue de capots de soufflante, le dispositif d'accrochage précité comportant une structure rigide ainsi qu'une structure aérodynamique avant sur laquelle les capots de soufflante sont articulés.

Ce type de dispositif d'accrochage, également appelé mât d'accrochage ou « EMS » (de l'anglais « Engine Mounting Structure »), permet globalement de suspendre un moteur tel qu'un turboréacteur au-dessous de la voilure de l'aéronef, ou bien de monter ce moteur au-dessus de cette même voilure, voire encore d'assembler ce moteur sur une partie arrière de fuselage de l'aéronef.

### ETAT DE LA TECHNIQUE ANTERIEURE

Un tel dispositif d'accrochage, connu par example de EP-453 360 et qui montre toutes les caractéristiques du préambule de la revendication 1, est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif d'accrochage est muni de moyens d'accrochage interposés entre le moteur et la structure rigide, ces moyens comportant globalement deux attaches moteur, ainsi qu'un dispositif de reprise des efforts de poussée générés par le moteur. Dans l'art antérieur, ce dispositif de reprise comprend habituellement deux bielles latérales raccordées d'une part à un carter du moteur tel que le carter de soufflante ou le carter intermédiaire, et d'autre part à une attache moteur arrière fixée sur le carter central ou le carter d'éjection de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant notamment la ségrégation et le maintien des systèmes tout en supportant des éléments de carénage aérodynamique, ces derniers prenant généralement la forme de panneaux ou capotages intégrés à ces mêmes structures. De façon connue de l'homme du métier, les structures secondaires se différencient de la structure rigide, également dénommée structure primaire, par le fait qu'elles ne sont pas destinées à assurer le transfert des efforts provenant du moteur et devant être transmis vers la voilure de l'aéronef.

Parmi les structures secondaires, on compte une structure aérodynamique avant située à l'avant de la structure rigide du mât d'accrochage, cette structure aérodynamique avant disposant non seulement d'une fonction de carénage aérodynamique, mais permettant également la mise en place, la ségrégation et le cheminement de différents systèmes (air, électrique, hydraulique, carburant). De plus, cette structure aérodynamique avant porte les capots de soufflante du moteur associé, tandis que les capots d'inverseur de poussée sont quant à eux généralement portés par la structure rigide du mât d'accrochage.

Dans les solutions de l'art antérieur, la structure aérodynamique avant comporte généralement un berceau revêtu d'un capotage aérodynamique, monté fixement sur ce dernier. Le capotage aérodynamique, également dit panneau ou élément de carénage aérodynamique, recouvre donc le berceau remplissant quant à lui un rôle structurel de support des capots de soufflantes.

Le berceau précité est habituellement monté sur la structure rigide à l'aide de moyens d'accrochage appropriés. Cependant, lorsque l'ensemble moteur est soumis à d'importantes contraintes tel que cela est rencontré durant les phases de décollage et d'atterrissage, ou encore en vol lors de fortes turbulences, la solidarisation du berceau de la structure aérodynamique avant à la structure rigide induit une modification substantielle de la géométrie globale de l'ensemble, et plus spécifiquement de celle de la nacelle. En particulier, il arrive que l'on puisse observer un désaffleurement entre l'entrée d'air de la nacelle accompagnant la déformation du moteur, et les capots de soufflante montés sur ladite structure aérodynamique avant solidaire de la structure rigide du mât d'accrochage, cette structure aérodynamique avant pouvant donc elle aussi se retrouver écartée de la même entrée d'air de nacelle.

Le phénomène observé provoque bien évidemment de la traînée, ce qui nuit aux performances globales de l'aéronef.

De plus, il est indiqué qu'un phénomène analogue est également rencontré lorsque le berceau portant fixement le capotage aérodynamique n'est plus monté sur la structure rigide du mât d'accrochage, mais exclusivement sur le carter de soufflante du moteur, solidaire de l'entrée d'air de la nacelle. Dans un tel cas, il arrive alors que l'on puisse observer un désaffleurement entre le capotage aérodynamique de berceau solidaire du carter de soufflante, et les autres carénages aérodynamiques du mât d'accrochage, et en particulier le carénage dit carénage de raccordement.

### EXPOSÉ DE L'INVENTION

L'invention a donc pour but de proposer un ensemble moteur pour aéronef remédiant aux inconvénients mentionnés ci-dessus, relatifs aux réalisations de l'art antérieur.

Pour ce faire, l'invention a pour objet un ensemble moteur pour aéronef comprenant un moteur, un dispositif d'accrochage du moteur ainsi qu'une nacelle entourant le moteur et pourvue de capots de soufflante, ce dispositif d'accrochage comportant une structure rigide ainsi qu'une structure aérodynamique avant, cette dernière présentant un berceau sur lequel les capots de soufflante sont articulés et étant revêtu d'un capotage aérodynamique, le berceau de la structure aérodynamique avant étant équipé de moyens d'accrochage arrière montés sur la structure rigide du dispositif d'accrochage. Selon l'invention, le berceau de la structure aérodynamique avant est de plus équipé de moyens d'accrochage avant montés sur un carter de soufflante du moteur.

Par conséquent, l'agencement proposé permet de limiter fortement les effets néfastes de désaffleurement décrits ci-dessus, étant donné que la partie avant du berceau de la structure aérodynamique avant portant les capots de soufflante peut à présent mieux accompagner la déformation du moteur durant les périodes de fortes sollicitations de l'ensemble. Ainsi, la jonction affleurante entre l'entrée d'air de la nacelle et les capots de soufflante peut être conservée, ce qui permet de limiter les pertes en traînée rencontrées avec les réalisations de l'art antérieur. A cet égard, les pertes en traînée sont également diminuées par la conservation de la jonction affleurante entre le capotage aérodynamique et les autres carénages aérodynamiques du mât d'accrochage, grâce à la présence des moyens d'accrochage arrière, de même que ces pertes en traînée sont aussi diminuées par la conservation de la jonction affleurante entre le capotage aérodynamique et l'entrée d'air, de par la présence des moyens d'accrochage avant.

De plus, cet agencement particulier permet avantageusement de limiter le porte-à-faux vers l'avant antérieurement rencontré pour le berceau structurel portant les capots de soufflante, puisque celui-ci est à présent équipé de moyens d'accrochage avant montés sur le carter de soufflante du moteur.

De préférence, les moyens d'accrochage avant prennent la forme d'une attache avant conçue de manière à reprendre des efforts s'exerçant selon une direction longitudinale du moteur, selon une direction transversale de ce même moteur, et également selon une direction verticale de ce dernier.

Par ailleurs, les moyens d'accrochage arrière comportent de préférence deux demi-attaches arrière disposées de part et d'autre d'une partie avant de la structure rigide du dispositif d'accrochage, chacune des deux demi-attaches arrière étant conçue de manière à reprendre des efforts s'exerçant selon une direction transversale du moteur et selon une direction verticale de ce dernier, et autorisant chacune un déplacement relatif limité, selon une direction longitudinale du moteur, entre une partie arrière du berceau de la structure aérodynamique avant, et une partie avant de la structure rigide.

En d'autres termes, chacune des deux demi-attaches arrière reprend les efforts s'exerçant selon les directions transversale et verticale, mais pas ceux s'exerçant dans la direction longitudinale selon laquelle les faibles déplacements relatifs entre la partie arrière de la structure aérodynamique avant et la partie avant de la structure rigide peuvent donc être absorbés.

Ainsi, la combinaison de l'attache avant et des deux demi-attaches arrière, constituant l'ensemble des moyens d'accrochage de la structure aérodynamique avant, permet d'obtenir des moyens d'accrochage se rapprochant avantageusement fortement d'un système de montage isostatique.

A titre indicatif, il est noté que dans ce qui précède, il a été fait mention de la reprise des efforts s'exerçant selon des directions transversales et verticales du moteur, par les différentes attaches. Cela s'applique particulièrement lorsque le moteur est destiné à être monté au-dessus de la voilure de l'aéronef ou suspendu au-dessous de celle-ci, et éventuellement aussi dans le cas d'un montage du moteur en partie arrière du fuselage de l'aéronef. Néanmoins, dans ce dernier cas, il se peut que les efforts repris par les attaches ne soient plus orientés transversalement et verticalement par rapport au moteur comme cela a été mentionné ci-dessus, mais respectivement orientés selon une première direction du moteur orthogonale à la direction longitudinale, et selon une seconde direction du moteur orthogonale à la première direction et à la direction longitudinale, chacune de ces première et seconde directions étant alors inclinées par rapport aux directions verticale et transversale du moteur. Naturellement, l'inclinaison précitée des première et seconde directions du moteur est fonction de la géométrie adoptée pour l'ensemble moteur, et de son positionnement par rapport à la partie arrière du fuselage, tel que cela est bien connu de l'homme du métier.

De préférence, les deux demi-attaches arrière sont agencées symétriquement par rapport à un plan médian de l'ensemble, passant par un axe longitudinal du moteur. Ici encore, il est noté que la deuxième direction définissant ce plan est donnée en fonction de la configuration adoptée. A titre d'exemple indicatif, lorsque le moteur est destiné à être monté au-dessus de la voilure de l'aéronef ou suspendu au-dessous de celle-ci, la deuxième direction est généralement la direction verticale du moteur.

Dans cet ensemble moteur où la nacelle comporte de façon classique une entrée d'air affleurant les capots de soufflante, et située en avant par rapport à ces derniers, on prévoit préférentiellement que le capotage aérodynamique est monté fixement sur le berceau portant les moyens d'accrochage avant et arrière précités. Le capotage aérodynamique, de préférence uniquement fixé sur son berceau, recouvre donc ce dernier remplissant quant à lui un rôle structurel de support des capots de soufflantes, puisque l'ensemble comporte en outre préférentiellement une pluralité d'articulations de capots de soufflante dont au moins certaines d'entre elles sont fixées sur ce même berceau.

Toujours de manière préférentielle, on fait en sorte qu'une partie arrière du berceau soit pénétrée par une partie avant de la structure rigide du dispositif d'accrochage.

Par ailleurs, le dispositif d'accrochage comprend de préférence une pluralité d'attaches moteur parmi lesquelles une attache moteur avant fixée d'une part à la structure rigide, et d'autre part au carter de soufflante du moteur. Dans un tel cas, on prévoit alors de préférence que l'attache moteur avant soit située, dans une direction longitudinale du moteur, entre les moyens d'accrochage avant et arrière du berceau de la structure aérodynamique avant.

Enfin, l'invention a également pour objet un aéronef comprenant au moins un ensemble moteur tel que celui décrit ci-dessus, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un ensemble moteur pour aéronef, selon un mode de réalisation préféré de la présente invention ;
- la figure 2 représente une vue partielle schématique de côté de l'ensemble moteur montré sur la figure 1 ; et
- les figures 3 et 4 représentent des vues partielles et détaillées en perspective, prises sous deux angles différents, de l'ensemble moteur montré sur la figure 1.

### EXPOSÉ DÉTAILLÉ DE MODES DE RÉALISATION PRÉFÉRÉS

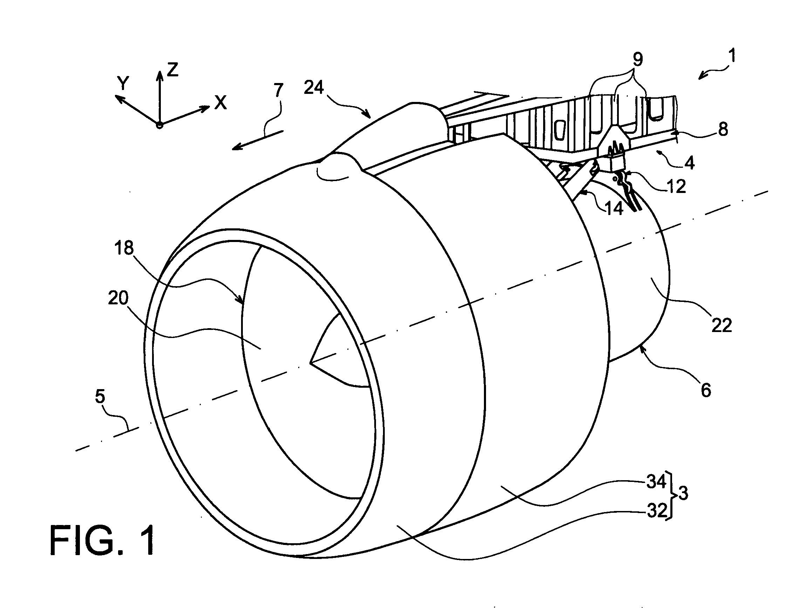

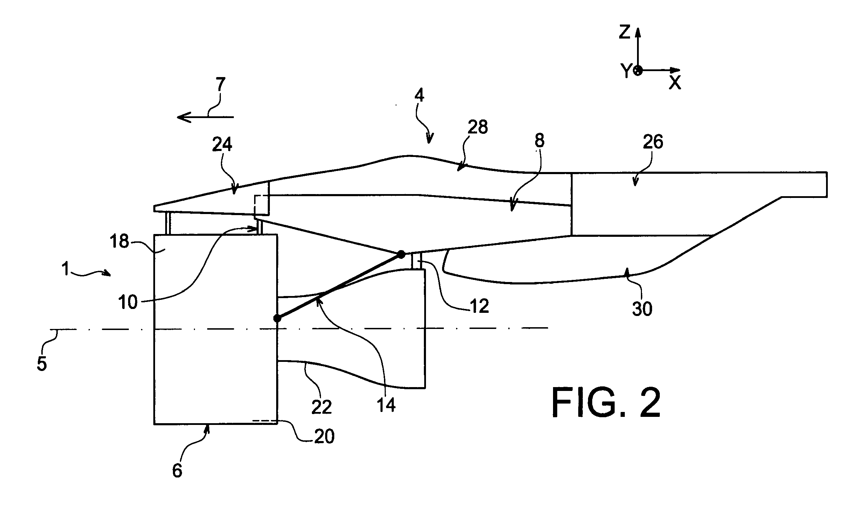

En référence tout d'abord aux figures 1 et 2, on voit un ensemble moteur 1 pour aéronef destiné à être fixé sous une aile de cet aéronef (non représentée), cet ensemble 1 comportant un dispositif d'accrochage 4, un moteur 6 tel qu'un turboréacteur accroché sous ce dispositif 4, et une nacelle 3 dont seule la partie avant a été représentée sur la figure 1.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que le dispositif d'accrochage 4 comporte une autre série d'attaches (non représentées) rapportées sur la structure rigide 8 et permettant d'assurer la suspension de cet ensemble 1 sous la voilure de l'aéronef.

De plus, le dispositif d'accrochage 4 comprend une pluralité de structures secondaires rapportées sur la structure rigide 8. Ces structures secondaires assurant la ségrégation et le maintien des systèmes tout en supportant des éléments de carénage aérodynamique seront décrits ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre, et présentent une jonction habituellement dénommée carter intermédiaire. Enfin, il est précisé que le carter central 22 se prolonge vers l'arrière par un carter dit d'éjection (non référencé).

Comme on peut clairement l'apercevoir sur la figure 1, les attaches moteur 10, 12 du dispositif 4 sont prévues au nombre de deux, et respectivement dénommées attache moteur avant et attache moteur arrière. L'attache moteur avant 10 est préférentiellement interposée entre une partie avant de la structure rigide 8, et une partie supérieure du carter de soufflante 18, également dite partie d'extrémité radiale. Cette attache moteur avant 10 est conçue de manière classique et connue de l'homme du métier, par exemple prévue pour reprendre les efforts s'exerçant dans les trois directions X, Y et Z.

D'autre part, l'attache moteur arrière 12, également réalisée de façon classique et connue de l'homme du métier et pouvant être conçue pour reprendre les efforts s'exerçant dans les directions Y et Z, est quant à elle interposée entre une partie plus arrière de la structure rigide 8, et le carter central 22 ou le carter d'éjection.

Le dispositif 14 de reprise des efforts de poussée générés par le moteur peut quant à lui présenter une forme classique de double bielle chacune disposée d'un côté du moteur 6, l'extrémité avant de chaque bielle étant montée sur une partie arrière du carter de soufflante ou du carter intermédiaire, et l'extrémité arrière étant rapportée sur l'attache moteur arrière 12 ou sur la structure rigide 8 à proximité de cette dernière.

Dans ce mode de réalisation préféré de la présente invention, la structure rigide 8 prend la forme d'un caisson s'étendant de l'avant vers l'arrière, sensiblement selon la direction X.

Le caisson 8 le mieux représenté sur la figure 1 prend alors la forme d'un mât de conception similaire à celle habituellement observée pour les mâts d'accrochage de turboréacteurs, notamment en ce sens qu'il est pourvu de nervures transversales 9 prenant chacune la forme d'un rectangle orienté dans un plan YZ.

En référence plus spécifiquement à la figure 2, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier, à l'exception de la structure aérodynamique avant 24 qui sera décrite en détails ci-après.

Plus précisément, la structure aérodynamique avant 24, qui est la seule à avoir été représentée sur la figure 1 pour des raisons de clarté, est habituellement placée à l'avant de la voilure et légèrement surélevée par rapport à la structure primaire 8 à laquelle elle est fixée. Elle présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de support des capots de soufflante et de carénage aérodynamique, mais permet également la mise en place, la ségrégation et le cheminement de différents systèmes (air, électrique, hydraulique, carburant).

Directement dans le prolongement arrière de cette structure 24, monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière anti-feu, et la formation d'une continuité aérodynamique entre la sortie du moteur et le mât d'accrochage.

En référence à présent plus spécifiquement à la figure 1, on peut voir une partie de la nacelle 3 comportant au niveau de son extrémité avant une entrée d'air 32 fixée à l'avant du carter de soufflante 18, cette entrée d'air 32 étant directement suivie vers l'arrière par deux capots de soufflante 34 (un seul visible en raison de la vue en perspective) chacun monté de façon articulée sur la structure aérodynamique secondaire 24 discutée ci-dessus. Bien que cela n'est pas été représenté, il doit être compris que la nacelle 3 de conception classique comporte vers l'arrière d'autres éléments connus de l'homme du métier, tels que des capots d'inverseurs de poussée montés sur la structure rigide 8.

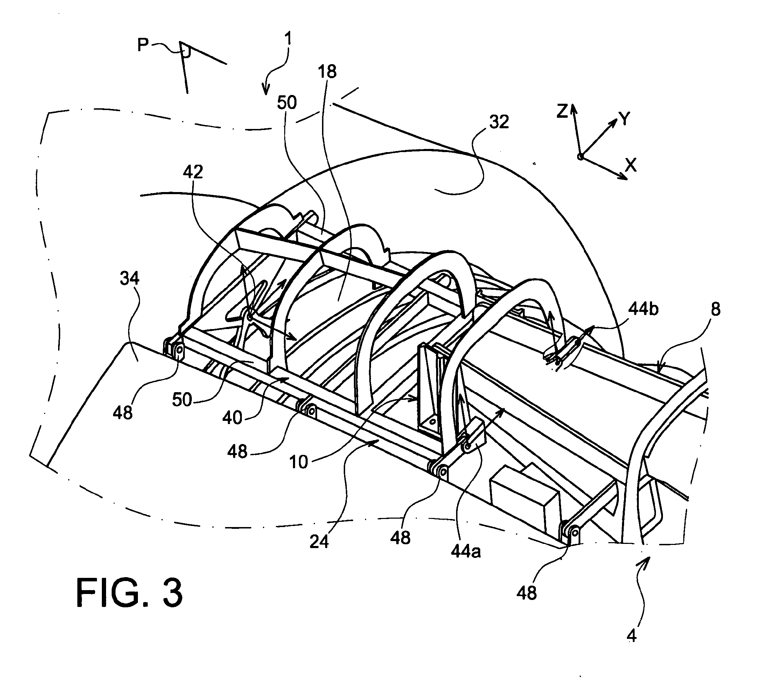

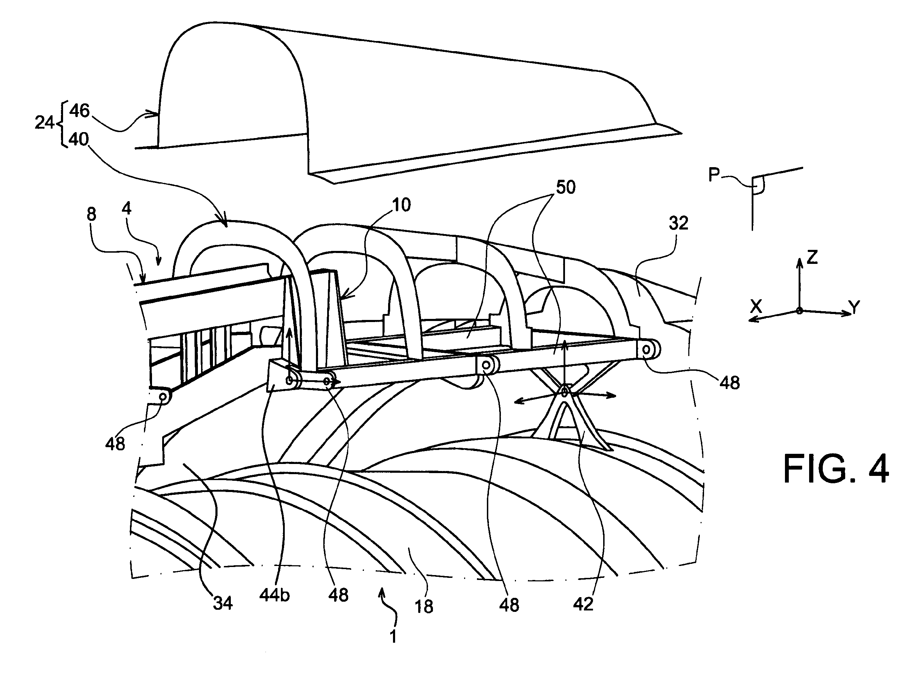

Il va à présent être fait référence conjointement aux figures 3 et 4, détaillant en particulier la structure aérodynamique avant 24 incorporant l'une des particularités de la présente invention.

La structure aérodynamique avant 24 présente un berceau 40 constituant la portion structurale de cet élément, cet élément étant également connu sous l'appellation anglaise « cradle ». Il s'étend globalement au-dessus du carter de soufflante 18, et est constitué d'une façon classique connue de l'homme du métier, à savoir par l'assemblage de longerons s'étendant sensiblement selon la direction X et d'arceaux transversaux s'ouvrant vers le bas, par exemple de forme sensiblement semi-cylindrique, comme cela est clairement visible sur les figures 3 et 4. Sur ces mêmes figures, on peut d'ailleurs apercevoir que la partie avant de la structure rigide 8 du mât d'accrochage 4 pénètre à l'intérieur de ce berceau en traversant au moins le premier arceau de ce même berceau. D'ailleurs, étant donné que l'attache moteur avant 10 précitée est montée au niveau d'une extrémité avant de la structure rigide 8, cela implique que cette attache avant 10 est en partie située au sein d'un espace intérieur délimité par les arceaux du berceau. A cet égard, il est noté que sur les figures 3 et 4, la partie inférieure de l'attache 10 destinée à être rapportée sur le carter de soufflante 18, n'a pas été représentée pour des raisons de clarté.

Pour assurer le montage du berceau 40 sur l'ensemble moteur 1, il est prévu des moyens d'accrochage avant ainsi que des moyens d'accrochage arrière, comme cela va à présent être décrit.

En ce qui concerne les moyens d'accrochage avant, ceux-ci prennent globalement la forme d'une attache avant 42 rapportée au niveau d'une extrémité avant du berceau 40. L'une des particularités de l'invention réside dans le fait que cette attache avant 42 est non seulement solidaire du berceau 40, mais également du carter de soufflante 18 du moteur. Plus précisément, celle-ci est montée sur une extrémité radiale supérieure du carter de soufflante 18, et est de préférence conçue de manière à reprendre les efforts s'exerçant selon chacune des directions X, Y et Z du moteur, comme cela est schématisé par les flèches sur les figures 3 et 4. A titre indicatif, cette attache moteur peut être classiquement conçue à l'aide de ferrures et d'axes, tel que cela est bien connu de l'homme du métier. Dans l'exemple montré sur les figures, l'attache prend globalement la forme d'une ferrure en V inversé, dont la pointe du V orientée vers le haut définit une chape traversée par un axe orienté selon la direction X du moteur, et assurant la liaison avec une autre ferrure en V rapportée sur le berceau 40, disposant quant à lui d'une pointe de V orientée vers le bas, coopérant donc avec la pointe de la première ferrure en V précitée.

D'autre part, les moyens d'accrochage arrière prennent de préférence la forme de deux demi-attaches arrière disposées de part et d'autre d'une partie avant de la structure rigide 8. Comme on le voit sur les figures 3 et 4, ces deux demi-attaches 44a, 44b sont de préférence situées en arrière par rapport à l'attache moteur avant 10, de sorte que cette dernière se retrouve donc placée, dans la direction X, entre les moyens d'accrochage avant et les moyens d'accrochage arrière de la structure aérodynamique avant 24. Chacune des deux demi-attaches arrières 44a, 44b est de préférence conçue de manière à reprendre des efforts s'exerçant selon les directions Y et Z, mais pas ceux s'exerçant selon la direction X. Ici encore, elles sont conçues d'une façon classique et connue de l'homme du métier, à l'aide d'axes et de ferrures. A titre indicatif, il est noté que chaque demi-attache peut comporter une ferrure s'étendant selon la direction Y et disposant au niveau de son extrémité opposée à celle rapportée sur la structure rigide 8, d'une chape traversée par un axe coopérant également avec une ferrure logée dans ladite chape et rapportée sur le berceau 40. De plus, chacune de ces deux demi-attaches arrière 44a, 44b est alors conçue de manière à autoriser un déplacement relatif limité, selon la direction X, entre la partie arrière de la structure aérodynamique 24 et la partie avant de la structure rigide 8 du mât. Il est indiqué que si les moyens d'accrochage avant sont rapportés au niveau de l'arceau le plus avant du berceau 40, les deux demi-attaches arrière 44a, 44b sont quant à elles rapportées au niveau de l'arceau du berceau 40 le plus arrière, comme cela est clairement visible sur les figures 3 et 4. D'autre part, ces deux demi-attaches sont agencées symétriquement par un plan vertical médian P passant par l'axe longitudinal 5 du moteur, ce plan P constituant globalement un plan de symétrie pour l'ensemble moteur destiné à être rapporté sous la voilure de l'aéronef.

Le berceau 40, revêtu de façon classique par un capotage aérodynamique 46 de préférence uniquement fixé sur ce même berceau 40 et sur aucun autre élément de l'ensemble, est pourvu d'une pluralité d'articulations de capots de soufflantes 34, ces articulations étant de préférence agencées au niveau de chacun des deux longerons latéraux du berceau, disposés de part et d'autre du plan P. Chacun de ces deux longerons 50 porte donc une pluralité d'articulations 48 raccordées à l'un des capots de soufflante 34 de la nacelle, ces articulations 48 portées par chaque longeron 50 pouvant constituer tout ou partie des moyens d'accrochage d'un capot de soufflante donné. Dans l'exemple montré sur les figures 3 et 4, les articulations 48 prévues sur un longeron 50 donné, par exemple prévues au nombre de trois, sont associées à une quatrième articulation 48 située dans le prolongement des trois autres, vers l'arrière de celles-ci, cette quatrième articulation 48 étant effectivement rapportée solidairement sur la partie avant de la structure rigide 8, en arrière des moyens d'accrochage arrière de la structure aérodynamique 24. Naturellement, pour chacun des deux capots de soufflantes 34, les articulations 48 prévues sur le berceau 40 et la ou les articulations 48 situées en arrière sur la structure rigide 8, sont prévues pour être agencées selon un même axe d'articulation du capot 34.

Bien entendu, diverses modifications peuvent être apportées par l'homme du métier à l'invention qui vient d'être décrite, uniquement à titre d'exemple non limitatif. A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Ensemble moteur (1) pour aéronef comprenant un moteur (6), un dispositif d'accrochage du moteur (4) ainsi qu'une nacelle entourant le moteur (6) et pourvue de capots de soufflante (34), ledit dispositif d'accrochage (4) comportant une structure rigide (8) ainsi qu'une structure aérodynamique avant (24), cette dernière présentant un berceau (40) sur lequel lesdits capots de soufflante sont articulés et étant revêtu d'un capotage aérodynamique (46), ledit berceau (40) étant équipé de moyens d'accrochage arrière (44a, 44b) montés sur la structure rigide (8) du dispositif d'accrochage (4),
**caractérisé en ce que** ledit berceau (40) de la structure aérodynamique avant (24) est de plus équipé de moyens d'accrochage avant (42) montés sur un carter de soufflante (18) dudit moteur (6).

2. Ensemble moteur (1) selon la revendication 1, **caractérisé en ce que** les moyens d'accrochage avant (42) prennent la forme d'une attache avant conçue de manière à reprendre des efforts s'exerçant selon une direction longitudinale (X) du moteur (6), selon une direction transversale (Y) de ce même moteur, et également selon une direction verticale (Z) de ce dernier.

3. Ensemble moteur (1) selon la revendication 1 ou la revendication 2, **caractérisé en ce que** les moyens d'accrochage arrière comportent deux demi-attaches arrière (44a, 44b) disposées de part et d'autre d'une partie avant de la structure rigide (8) du dispositif d'accrochage (4), chacune des deux demi-attaches arrière étant conçue de manière à reprendre des efforts s'exerçant selon une direction transversale (Y) du moteur (6) et selon une direction verticale (Z) de ce dernier, et autorisant chacune un déplacement relatif limité, selon une direction longitudinale (X) du moteur (6), entre une partie arrière du berceau (40) de ladite structure aérodynamique avant (24) et une partie avant ladite structure rigide (8).

4. Ensemble moteur (1) selon la revendication 3, **caractérisé en ce que** lesdites deux demi-attaches arrière (44a, 44b) sont agencées symétriquement par rapport à un plan médian (P) de l'ensemble (1), passant par un axe longitudinal (5) du moteur (6).

5. Ensemble moteur (1) selon l'une quelconque des revendications précédentes, **caractérisé en ce que** ladite nacelle (3) comporte une entrée d'air (32) affleurant les capots de soufflante (34), et située en avant par rapport à ces derniers.

6. Ensemble moteur (1) selon l'une quelconque des revendications précédentes, **caractérisé en ce que** ledit capotage aérodynamique (46) est monté fixement sur ledit berceau (40) portant les moyens d'accrochage avant et arrière (42, 44a, 44b).

7. Ensemble moteur (1) selon l'une quelconque des revendications précédentes, **caractérisé en ce qu'**une partie arrière du berceau (40) est pénétrée par une partie avant de ladite structure rigide (8) du dispositif d'accrochage (4).

8. Ensemble moteur (1) selon l'une quelconque des revendications précédentes, **caractérisé en ce qu'**il comprend une pluralité d'articulations de capots de soufflante (48), au moins certaines de ces articulations étant fixées sur ledit berceau (40).

9. Ensemble moteur (1) selon l'une quelconque des revendications précédentes, **caractérisé en ce que** ledit dispositif d'accrochage (4) comprend de plus une pluralité d'attaches moteur parmi lesquelles une attache moteur avant (10) fixée d'une part à la structure rigide (8), et d'autre part audit carter de soufflante (18) du moteur (6).

10. Ensemble moteur (1) selon la revendication 9, **caractérisé en ce que** ladite attache moteur avant (10) est située, dans une direction longitudinale (X) du moteur (6), entre lesdits moyens d'accrochage avant et arrière du berceau (40) de la structure aérodynamique avant (24).

11. Aéronef comprenant au moins un ensemble moteur (1) selon l'une quelconque des revendications précédentes, assemblé sur une aile ou sur une partie arrière de fuselage de cet aéronef.

## Claims

1. Aircraft engine assembly (1) comprising an engine (6), an engine mounting structure (4) and a nacelle surrounding the engine (6) and provided with fan cowls (34), said mounting structure (4) comprising a rigid structure (8) and a forward aerodynamic structure (24), this latter structure has a cradle (40) on which said fan cowls are hinge mounted and is clad with aerodynamic cowling (46), said cradle (40) being equipped with aft mounting means (44a, 44b) mounted on the rigid structure (8) of the mounting structure (4),
**characterized in that** said cradle (40) of the forward aerodynamic structure (24) is also equipped with forward mounting means (42) mounted on a fan case (18) of said engine (6).

2. Engine assembly (1) according to claim 1, **characterized in that** the forward mounting means (42) are in the form of a forward attachment designed to transmit loads exerted in a longitudinal direction (X) of the engine (6), in a transverse direction(Y) of this same engine, and also in a vertical directions (Z) of this engine.

3. Engine assembly (1) according to claim 1 or claim 2, **characterized in that** the aft mounting means comprise two aft semi-attachments (44a, 44b) arranged either side of a forward part of the rigid structure (8) of the mounting structure (4), each of the two aft semi-attachments being designed to transmit loads exerted in a transverse direction (Y) to the engine (6) and in a vertical direction (Z) of the latter, and each allowing relative limited movement in a longitudinal direction (X) of the engine (6) between an aft part of the cradle (40) of said forward aerodynamic structure (24) and a forward part of said rigid structure (8).

4. Engine assembly (1) according to claim 3, **characterized in that** said aft semi-attachments (44a, 44b) are arranged symmetrically relative to a median plane (P) of the assembly (1), passing through a longitudinal axis (5) of the engine (6).

5. Engine assembly (1) according to any of the preceding claims, **characterized in that** said nacelle (3) comprises an air intake (32) lying flush with the fan cowls (34), and positioned forwardly relative to these cowls.

6. Engine assembly (1) according to any of the preceding claims, **characterized in that** said aerodynamic cowling (46) is fixedly mounted on said cradle (40) carrying the forward and aft mounting means (42, 44a, 44b).

7. Engine assembly (1) according to any of the preceding claims, **characterized in that** a forward part of said rigid structure (8) of the mounting structure (4) enters into an aft portion of the cradle (40).

8. Engine assembly (1) according to any of the preceding claims, **characterized in that** it comprises a plurality of fan cowls hinge fittings (48), at least some of these hinge fittings being fixed to said cradle (40).

9. Engine assembly (1) according to any of the preceding claims, **characterized in that** said mounting structure (4) also comprises a plurality of engine attachments amongst which a forward engine attachment (10) attached firstly to the rigid structure (8) and secondly to the said fan case (18) of the engine (6).

10. Engine assembly (1) according to claim 9, **characterized in that** said forward engine attachment (10) is positioned, in a longitudinal 1 direction of the engine (6), between said forward and aft mounting means of the cradle (40) of the forward aerodynamic structure (24).

11. Aircraft comprising at least one engine assembly (1) according to any of the preceding claims, assembled on a wing or an aft part of the fuselage of this aircraft.

## Patentansprüche

1. Triebwerkanordnung (1) für ein Luftfahrzeug, umfassend ein Triebwerk (6), eine Aufhängevorrichtung des Triebwerks (4) sowie eine Gondel, die das Triebwerk (6) umschließt und Fanverkleidungen (34) aufweist, wobei die Aufhängevorrichtung (4) eine starre Struktur (8) sowie eine vordere aerodynamische Struktur (24) umfasst, wobei diese letztere ein Traggestell (40) aufweist, mit dem die Fanverkleidungen beweglich verbunden sind und das mit einer aerodynamischen Verschalung (26) verkleidet ist, wobei das Traggestell (40) mit hinteren Aufhängemitteln (44a,44b), die an der starren Struktur (8) der Aufhängevorrichtung (4) angebracht sind, ausgestattet ist,
**dadurch gekennzeichnet, dass** das Traggestell (40) der vorderen aerodynamischen Struktur (24) ferner mit vorderen Aufhängemitteln (42) ausgestattet ist, die an einem Fangehäuse (18) des Triebwerks (6) angebracht sind.

2. Triebwerkanordnung (1) nach Anspruch 1, **dadurch gekennzeichnet, dass** die vorderen Aufhängemittel (42) die Form einer vorderen Aufhängung aufweisen, die zur Aufnahme von Kräften, die in Längsrichtung (X) des Triebwerks (6) in Transversalrichtung (Y) dieses Triebwerks und auch in Vertikalrichtung (Z) dieses letzteren auftreten, gestaltet ist.

3. Triebwerkanordnung (1) nach Anspruch 1 oder Anspruch 2, **dadurch gekennzeichnet, dass** die hinteren Aufhängemitteln zwei hintere Halbaufhängungen (44a,44b) umfassen, die sich beiderseits einer vorderen Partie der starren Struktur (8) der Aufhängevorrichtung (4) befinden, wobei die zwei hinteren Halbaufhängungen zur Aufnahme von Kräften, die in Transversalrichtung (Y) des Triebwerks (6) und in Vertikalrichtung (Z) des letzteren auftreten, gestaltet sind, und jeweils eine beschränkte relative Verschiebung in Längsrichtung (X) des Triebwerks (6) zwischen einer hinteren Partie des Traggestells (40) der vorderen aerodynamischen Struktur (24) und einer Partie vor der starren Struktur (8) zulassen.

4. Triebwerkanordnung (1) nach Anspruch 3, **dadurch gekennzeichnet, dass** die zwei hinteren Halbaufhängungen (44a,44b) in Bezug auf eine Mittelebene (P) der Anordnung (1), die durch eine Längsachse (5) des Triebwerks (6) geht, symmetrisch angeordnet sind.

5. Triebwerkanordnung (1) nach einem der vorhergehenden Ansprüche, **dadurch gekennzeichnet, dass** die Gondel (3) einen Lufteinlass (32) umfasst, der mit den Fanverkleidungen (34) fluchtet und sich in Bezug auf diese letzteren vorne befindet.

6. Triebwerkanordnung (1) nach einem der vorhergehenden Ansprüche, **dadurch gekennzeichnet, dass** die aerodynamische Verschalung (46) fest an dem Traggestell (40), das die vorderen und hinteren Aufhängevorrichtungen (42,44a,44b) trägt, befestigt ist.

7. Triebwerkanordnung (1) nach einem der vorhergehenden Ansprüche, **dadurch gekennzeichnet, dass** eine vordere Partie der starren Struktur (8) der Aufhängevorrichtung (4) in eine hintere Partie des Traggestells (40) eindringt.

8. Triebwerkanordnung (1) nach einem der vorhergehenden Ansprüche, **dadurch gekennzeichnet, dass** sie mehrere Fanverkleidungsgelenke (48) umfasst, wobei zumindest einige dieser Gelenke an dem Traggestell (40) befestigt sind.

9. Triebwerkanordnung (1) nach einem der vorhergehenden Ansprüche, **dadurch gekennzeichnet, dass** die Aufhängevorrichtung (4) ferner mehrere Triebwerkaufhängungen umfasst, von denen eine vordere Triebwerkaufhängung (10) einerseits an der starren Struktur (8) und andererseits an dem Fangehäuse (18) des Triebwerks (6) befestigt ist.

10. Triebwerkanordnung (1) nach Anspruch 9, **dadurch gekennzeichnet, dass** sich die vordere Triebwerkaufhängung (10) in Längsrichtung (X) des Triebwerks (6) zwischen den vorderen und hinteren Aufhängevorrichtungen des Traggestells (40) der vorderen aerodynamischen Struktur (24) befindet.

11. Luftfahrzeug, umfassend mindestens eine Triebwerkanordnung (1) nach einem der vorhergehenden Ansprüche, die an einem Tragflügel oder einer hinteren Partie des Rumpfes dieses Luftfahrzeugs angebracht ist.
